# EUROPEAN PATENT SPECIFICATION

(11) **EP 3 952 265 B1**
(45) Date of publication and mention of the grant of the patent: **20.03.2024**
(21) Application number: 20868876.2
(22) Date of filing: 21.09.2020
(51) Int. Cl.: H04L 65/10, H04M 3/42

(54) **CALL PROCESSING METHOD AND DEVICE**
ANRUFVERARBEITUNGSVERFAHREN UND -VORRICHTUNG
PROCÉDÉ ET DISPOSITIF DE TRAITEMENT D'APPEL

(30) Priority: 27.09.2019 CN 201910926313
(43) Date of publication of application: 09.02.2022
(73) Proprietor: Huawei Technologies Co., Ltd., Shenzhen, Guangdong 518129 (CN)
(72) Inventor: CHANG, Lijuan, Shenzhen, Guangdong 518129 (CN); WU, Gang, Shenzhen, Guangdong 518129 (CN); BIAN, Libo, Shenzhen, Guangdong 518129 (CN); LI, Zheng, Shenzhen, Guangdong 518129 (CN); PENG, Yunfeng, Shenzhen, Guangdong 518129 (CN)
(74) Representative: Isarpatent
(86) International application number: PCT/CN2020/116428
(87) International publication number: WO 2021/057642

(56) References cited:
- EP-A1- 2 114 049
- CN-A- 101 252 780
- CN-A- 102 130 888
- CN-A- 102 131 009
- CN-A- 105 516 936
- CN-A- 110 971 766
- CN-B- 102 130 888
- CN-B- 102 131 009
- US-B2- 8 213 416
- "3rd Generation Partnership Project; Technical Specification Group Core Network and Terminals; IP Multimedia Subsystem (IMS) Customized Ringing Signal(CRS); Protocol specification (Release 15)", 3GPP STANDARD; TECHNICAL SPECIFICATION; 3GPP TS 24.183, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V15.0.0, 21 June 2018 (2018-06-21), pages 1-59, XP051472954, [retrieved on 2018-06-21]

## Description

Priority is claimed to Chinese Patent Application No. 201910926313.2, filed with the China National Intellectual Property Administration on September 27, 2019 and entitled "CALL PROCESSING METHOD AND DEVICE".

### TECHNICAL FIELD

This disclosure generally relates to the communications field, and the invention in particular relates to a call processing method, a media server, and a terminal device.

### BACKGROUND

With deployment of a 4th generation (4G) wireless communications system and introduction of VoLTE (Voice over LTE), a wireless communications system can provide high-definition audio/video communication between a calling user and a called user, and a ring back tone audio/video service.

In a current VoLTE ring back tone system, after a user answers the call, a ring back tone stops playing. This affects user experience and limits development of the ring back tone service.

EP 2114049 A1 discloses a method for realizing video call services.

CN 102131009 B discloses a method for playing a video ring back tone.

CN 102130888 B discloses a method for continuing to play a ring back tone during a call between a calling user and a called user.

### SUMMARY

The object of the present invention is to provide a call processing method, a media server, and a terminal device, so that a media server continues to play a video ring back tone for a calling terminal in an audio call process between a calling user and a called user, after the called user answers the call. This shall enrich user experience, improve network capability utilization, and facilitate development of a ring back tone service. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such.

According to a first aspect according to the invention, the invention provides a call processing method. The method includes: A media server receives an initial call request sent by a calling terminal, and forwards the initial call request to a called terminal; the media server receives a success response to the initial call request from the called terminal, where the success response to the initial call request indicates that the called is off-hook; and after receiving the success response to the initial call request, the media server performs call media resource negotiation and video resource negotiation with the called terminal, and sends, based on video resource negotiation with the called terminal, a video stream to the called terminal during an established call between the calling terminal and the called terminal.

In the foregoing method, in an audio call process between a calling user and a called user, a video stream is sent to the called user. This improves user experience and improves network capability utilization.

According to the invention, that call media resource negotiation and video resource negotiation with the called terminal are performed includes: in response to the success response to the initial call request that is sent by the called terminal, performing media resource negotiation with the called terminal on audio in the call process between the calling terminal and the called terminal and on video played for the called terminal in the call process. In the method, after receiving the success response to the initial call request that is sent by the called terminal, the media server performs media negotiation with the called terminal. This ensures that video is played for the called terminal in the call process.

Also in accordance with the invention, after the success response to the initial call request is received from the called terminal, the method further includes: forwarding the success response to the initial call request to the calling terminal, and receiving an acknowledgment message that is sent by the calling terminal and that is of the success response to the initial call request; and that call media resource negotiation and video resource negotiation with the called terminal are performed includes: in response to the acknowledgment message that is sent by the calling terminal and that is of the success response to the initial call request, performing media resource negotiation with the called terminal on audio in the call process between the calling terminal and the called terminal and on video played for the called terminal in the call process. In the method, after a channel between the calling terminal and the called terminal is established, the media server performs media negotiation through the channel, to ensure that the video is played for the called terminal in the call process.

In a possible design, the media server determines a service, for playing a video during a esblished call, that is subscribed to by a calling user or a called user, and then performs call media resource negotiation and video resource negotiation with the called terminal.

According to the invention, that call media resource negotiation and video resource negotiation with the called terminal are performed includes:
sending a media renegotiation message to the called terminal, where the media renegotiation message carries session description protocol SDP information of a media resource in the call process between the calling terminal and the called terminal and SDP information of a video stream played for the called terminal in the call process; and receiving a success response to the media renegotiation message from the called terminal. In the method, the media renegotiation message carries the SDP information of the video stream played in the call process and the SDP information of the media resource in the call process, to ensure that the video is played in the call process without affecting call quality.

In a possible design, the method further includes: sending the success response to the initial call request to the calling terminal, where the success response to the initial call request carries the session description protocol SDP information of the media resource in the call process between the calling terminal and the called terminal and SDP information of a video stream played for the calling terminal in the call process; and receiving a success response to the media renegotiation message from the calling terminal. In this method, in the call process, video is respectively played for the calling terminal and the called terminal. This improves experience of the calling user and the called user and network capability utilization.

According to a second aspect according to the invention, the invention alsao provides a call processing method, applied to a terminal device A called terminal receives an initial call request sent by a calling terminal; after sending a success response to the initial call request to a media server, the called terminal performs media resource negotiation with the media server on audio during an established call between the calling terminal and the called terminal and on video played for the called terminal in the call process; and the called terminal plays a video stream sent by the media server in an audio call process between the calling terminal and the called terminal. In the foregoing method, in an audio call process between a calling user and a called user, a video stream is sent to the called user. This improves user experience and improves network capability utilization.

Also in accordance with the invention, that media resource negotiation with the media server is performed on the audio in the call process between the calling terminal and the called terminal and on the video played for the called terminal in the call process includes:
receiving a media renegotiation message sent by the media server, where the media renegotiation message carries session description protocol SDP information of a media resource of the audio in the call process between the calling terminal and the called terminal and SDP information of a video stream played for the called terminal in the call process; and returning a success response to the media renegotiation message to the media server. The media renegotiation message carries the SDP information of the video stream played in the call process and the SDP information of the media resource in the call process, to ensure that the video is played in the call process without affecting call quality.

In a possible design, after the calling terminal is on-hook, the called terminal performs media resource negotiation with the media server, and receives and plays an audio stream and a video stream that are sent by the media server after the calling terminal is on-hook. In the method, after the calling terminal is on-hook, the media server may further perform media negotiation with the called terminal, and play video for the called user through the called terminal. This improves user experience and improves network capability utilization.

According to a third not claimed aspect, an embodiment of this application provides a call processing method. A media server receives an initial call request sent by a calling terminal, and sends the initial call request to a called terminal; the media server receives a success response to the initial call request from the called terminal; after the called user answers the call and a call between the calling terminal and called terminal ends, the media server receives an message indicating that a conversation ends sent by the calling terminal; in response to the message indicating that a conversation ends sent by the calling terminal, the media server performs media resource negotiation with the called terminal after the call ends; and the media server sends an audio stream and a video stream to the called terminal based on the negotiated media resource. In the foregoing method, in an audio call process between a calling user and a called user, a video stream is sent to the called user. This improves user experience and improves network capability utilization.

In a possible not claimed design, after receiving the message indicating that a conversation ends from the calling terminal, the media server determines that the called user subscribes to an audio/video playing service after a call ends, and then performs media resource negotiation with the called terminal. In the method, after the calling terminal is on-hook, the media server may play video for the called user through the called terminal. This improves user experience and improves network capability utilization.

In a possible not claimed design, that the media server performs media resource negotiation with the called terminal includes: sending a media renegotiation message to the called terminal, where the media renegotiation message carries SDP information of the audio stream and SDP information of the video stream; and receives a success response to the media renegotiation message that is sent by the called terminal. The media renegotiation message carries SDP information of the call, to ensure that the video is played after the calling terminal is on-hook without affecting call quality.

According to a fourth aspect according to the invention, the invention also provides a media server. The media server has a function of the media server that implements the foregoing method. The function may be implemented by hardware, or may be implemented by hardware executing corresponding software. The hardware or the software includes one or more units corresponding to the foregoing function, including a call processing unit, a media negotiation unit, and a media sending unit.

In a possible not claimed design, a structure of the media server includes a processor and a memory. The memory is configured to store program code for performing the foregoing method. The processor is configured to execute a program stored in the memory. The media server may further include a communications interface, configured to communicate with another device.

According to a fifth aspect according to the invention, the invention also provides a terminal device. The terminal device has a function of the terminal device that implements the foregoing method. The function may be implemented by hardware, or may be implemented by hardware executing corresponding software. The hardware or the software includes one or more units corresponding to the foregoing function, for example, including a call processing unit, a media negotiation unit, a media receiving unit, and a media playing unit.

In a possible not claimed design, a structure of the terminal device includes a processor and a memory. The memory is configured to store program code for performing the foregoing method. The processor is configured to execute a program stored in the memory. The terminal device may further include a communications interface, configured to communicate with another device.

According to the invention, the invention also provides a call processing method. A called terminal device receives an initial call request sent by a calling terminal, and sends a success response to the initial call request to the calling terminal device, where the success response to the initial call request is used to indicate that the called terminal device is off-hook; and after the called terminal is off-hook and a call between the calling terminal and the called terminal ends, media resource negotiation with the media server is performed after the call ends, and an audio stream and a video stream that are sent by the media server are received.

According to the invention, that media resource negotiation with the media server is performed includes: receiving a media renegotiation message from the media server, where the media renegotiation message carries SDP information of the audio stream and SDP information of the video stream; and sending a success response to the media renegotiation message to the media server.

According to a seventh not claimed aspect, an embodiment of this application provides a terminal device. The terminal device has a function of the called terminal device that implements the method in the sixth aspect. The function may be implemented by hardware, or may be implemented by hardware executing corresponding software. The hardware or the software includes one or more units corresponding to the foregoing function, for example, including a call processing unit, a media negotiation unit, a media receiving unit, and a media playing unit.

In a possible not claimed design, a structure of the terminal device includes a processor and a memory. The memory is configured to store program code for performing the foregoing method. The processor is configured to execute a program stored in the memory. The terminal device may further include a communications interface, configured to communicate with another device.

According to an eighth not claimed aspect, an embodiment of this application provides a computer storage medium, configured to store computer software instructions that are used by the foregoing media server and terminal device and that include programs designed for executing the foregoing aspects.

The foregoing technical solution according to the embodiments of this application implements that the media server continues to play the video ring back tone for the calling terminal in or after the audio call process between the calling user and the called user, after the called user anwsers the call. This enriches user experience, improves network capability utilization, and facilitates development of a ring back tone service.

### BRIEF DESCRIPTION OF DRAWINGS

FIG. 1 is a schematic diagram of an architecture of a call processing system according to an embodiment of this application;
FIG. 2A and FIG. 2B are a schematic flowchart of a call processing method according to an embodiment of this application;
FIG. 3A and FIG. 3B are a schematic flowchart of another call processing method according to an embodiment of this application;
FIG. 4A and FIG. 4B are a schematic flowchart of another call processing method according to an embodiment of this application;
FIG. 5 is a schematic diagram of a structure of a media server according to an embodiment of this application;
FIG. 6 is a schematic diagram of a structure of another media server according to an embodiment of this application;
FIG. 7 is a schematic diagram of a structure of a terminal device according to an embodiment of this application;
FIG. 8 is a schematic diagram of a structure of another terminal device according to an embodiment of this application; and
FIG. 9 is a schematic diagram of a structure of another call processing system according to an embodiment of this application.

### DESCRIPTION OF EMBODIMENTS

To make objectives, technical solutions, and advantages of the present application clearer, the following further describes implementations of the present application in detail with reference to the accompanying drawings.

In embodiments of this application, a media server continues to play a video ring back tone for a calling terminal during an established call between a calling user and a called user, after the called user answers the call. Alternatively, a media server continues to play a video ring back tone for a calling terminal after a called user ends a call and goes on-hook. The embodiments of this application are applicable to a 4th generation (4G) mobile communications network architecture, a 5th generation (5G) mobile communications network architecture, or a future network. For ease of descriptions, the following describes a network architecture and a method procedure of the solutions by using the 4G network architecture as an example.

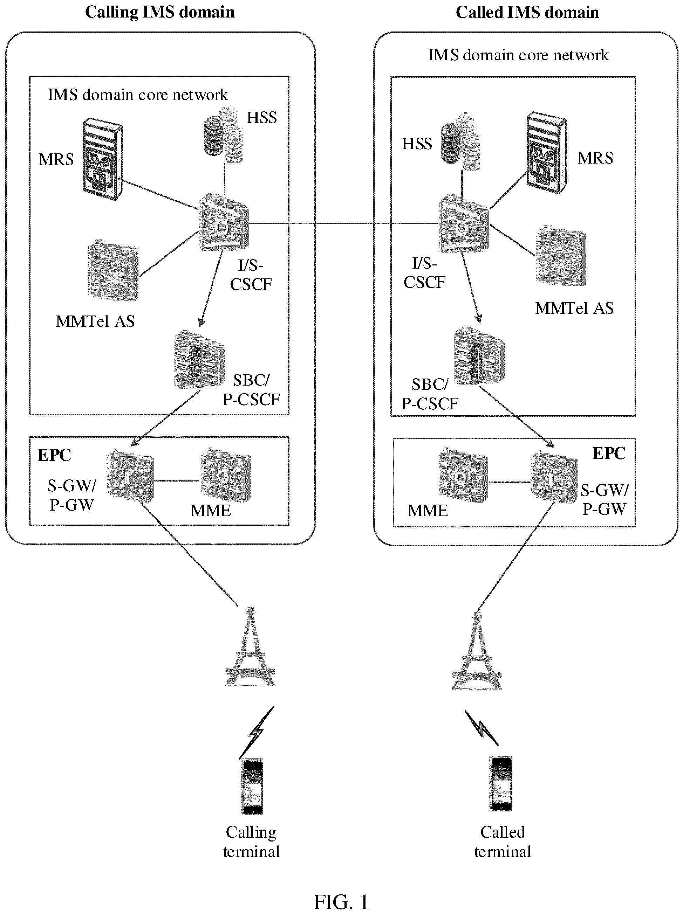

FIG. 1 is an architectural diagram of a system applied to a VoLTE network according to an embodiment of this application. The system includes a calling terminal, a called terminal, a radio access network, and internet protocol (internet protocol, IP) multimedia subsystem (IP multimedia subsystem, IMS) domain on a calling side and a called side. The IMS domain on the calling side and the called side may include an IMS domain core network and an evolved packet core (Evolved Packet Core, EPC) network. The IMS domain core network includes a serving-call session control function (serving-call session control function, S-CSCF), an interrogating-call session control function (interrogating-call session control function, I-CSCF), a proxy-call session control function (proxy-call session control function, P-CSCF), a home subscriber server (home subscriber server, HSS), a session border controller (session border controller, SBC), and several dedicated servers, such as a multimedia telephony application server (multimedia telephony application server, MMTel AS). The I-CSCF and the S-CSCF may be integrated together, and may be briefly referred to as "I/S-CSCF". The SBC and the P-CSCF may be integrated together, and may be briefly referred to as "SBC/P-CSCF". The EPC may include a packet data network gateway (packet data network gateway, P-GW), a serving gateway (serving gateway, S-GW), and a mobility management entity (mobility management entity, MME). The P-GW and the S-GW may be integrated together, and may be briefly referred to as "S-GW/P-GW".

The foregoing network elements are all corresponding network elements in a wireless communications network in the conventional technology, are not described in detail herein, and are merely briefly described. For example, the S-CSCF may be used for user registration, authentication control, session routing, service trigger control, and maintenance of session status information. The I-CSCF may be used for assignment and interrogating of an S-CSCF with which a user registers. The P-CSCF may be used for proxy for signaling and messages. The HSS may be configured to store user subscription information and location information. The SBC may provide secure access and media processing. The MMTel AS provides basic and supplementary multimedia telephony services. The MME is a core device on the EPC network. The S-GW may be configured to connect the IMS core network to a wireless network, and the P-GW may be configured to connect the IMS core network to an IP network.

The IMS domain core network on the calling side and the called side further includes a media server. The media server plays video for a calling user or a called user. The media server may include a media control server and a media resource server MRS. The media control server and the media resource server may be integrated together or physically separated. The media control server processes a signaling message, and the media resource server provides an audio stream and a video stream for the calling user and/or the called user.

A calling terminal and a called terminal are devices with a wireless transceiver function, and may be deployed on the land, including an indoor device, an outdoor device, a handheld device, or a vehicle-mounted device; may be deployed on a water surface (for example, on a ship); or may be deployed in the air (for example, on a plane, a balloon, and a satellite). Specifically, the terminal device may be a terminal device (terminal device) that can access a mobile network, a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

It should be noted that the foregoing description does not constitute a limitation on the architectural diagram of the system in this embodiment of the present application. The architectural diagram of the system in this embodiment of this application includes but is not limited to the architectural diagram shown in FIG. 1.

In an optional manner, the media server may not be located in the IMS domain core network on the calling side or the called side, but is independent of the IMS domain core network on the calling side and the called side.

In an optional manner, this embodiment of this application may alternatively be a scenario of a user in the VoLTE network and a user in another network (for example, an IMS network, a fixed network, or a switched network). For example, in this embodiment of this application, a calling user or a called user is a VoLTE user, and a called user or a calling user is a user in another network.

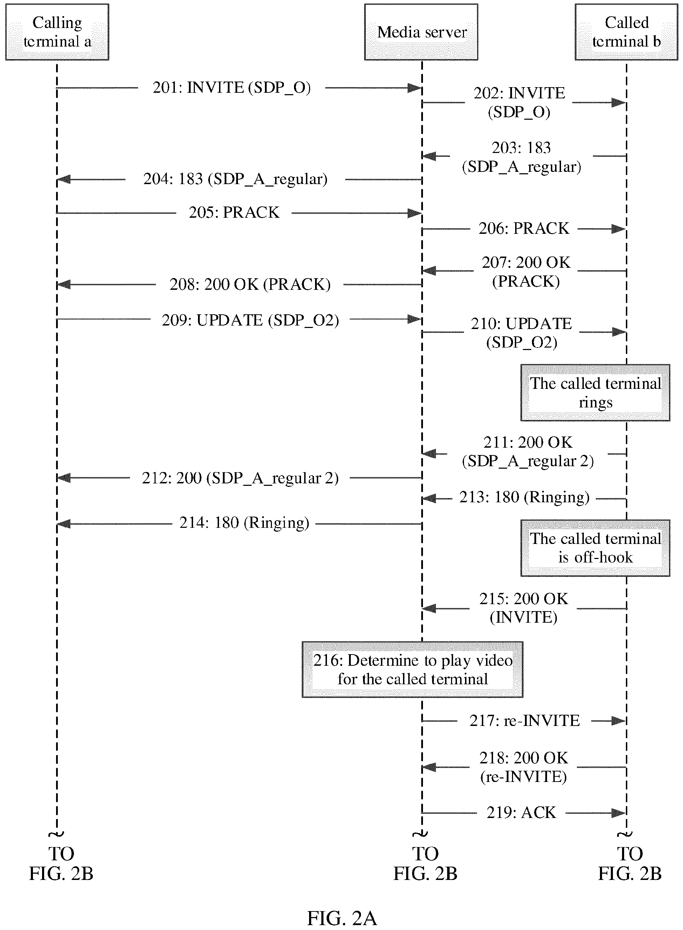

A call processing method is provided according to an embodiment of the present application and is applied to the system shown in FIG. 1. A media server respectively plays video for a calling terminal and a called terminal after the called terminal is off-hook. Further, the media server may continue to play video for the called terminal after the calling terminal is on-hook. Specific steps are shown in any embodiment in FIG. 2A to FIG. 4B. For brevity and ease of understanding, some network elements involved in signaling interaction are not shown in the figure, for example, an S-GW/P-GW, an SBC/P-CSCF, and an I-CSCF/S-CSCF. The method specifically includes the following steps.

201: A media server receives an initial call request sent by a calling terminal, for example, an INVITE message. The calling terminal initiates the call request to a called terminal, to request to make a voice call with the called terminal.

The initial call request includes session description protocol (session description protocol, SDP) information (SDP_O) of the calling terminal, and the SDP information (SDP_O) of the calling terminal includes but is not limited to a call type, numbers of a calling user and a called user, media types and coding schemes supported by the calling user, and the like. The initial call request is used to perform call media negotiation between the calling terminal and the called terminal.

202: The media server forwards the initial call request to the called terminal, and an IMS network routes the called terminal.

203: The media server receives a 183 message from the called terminal. After receiving the INVITE message, the called terminal sends the 183 message to the media server to perform media negotiation with the calling terminal. The 183 message carries SDP information of the called terminal.

204: The media server forwards, to the calling terminal, the 183 message sent by the called terminal.

205: The media server receives an acknowledgment message PRACK (Provisional Response Acknowledgment) that is returned by the calling terminal and that is of the 183 message.

206: The media server forwards the PRACK message to the called terminal.

207: The media server receives a response to the PRACK message that is returned by the called terminal, that is, a 200 OK (PRACK) message.

208: The media server forwards the 200 OK (PRACK) message to the calling terminal.

209: The media server receives an UPDATE message sent by the calling terminal. If the calling terminal starts a Precondition procedure, the calling terminal completes resource reservation, and then sends the UPDATE message carrying call resource information to the called side.

210: The media server forwards the UPDATE message to the called terminal. After receiving the UPDATE message, the called terminal completes resource reservation and starts ringing.

211: The media server receives a success response to the UPDATE message that is sent by the called terminal, for example, a 200 OK (SDP_A_regular 2) message. The 200 OK (SDP_A_regular 2) message carries call resource information of the called terminal.

212: The media server forwards the success response (for example, the 200 OK (SDP_A_regular 2) message) to the UPDATE message to the calling terminal.

213: The media server further receives a 180 ringing message sent by the called terminal, to indicate that the called terminal starts ringing.

214: After receiving the 180 ringing message from the called terminal, the media server forwards the 180 ringing message from the called terminal to the calling terminal.

215: The media server receives a success response (for example, a 200 OK (INVITE)) message to the initial call request (for example, the INVITE message) that is sent by the called terminal. The called user answers the call after hearing a ring back tone, and the called terminal sends the success response (for example, the 200 OK message) to the initial call request, to indicate that the called user answers the call.

216: After receiving the success response (for example, the 200 OK message) to the initial call request that is sent by the called terminal, the media server determines to play video for the called terminal during an established call between the calling terminal and the called terminal.

For example, after receiving an message indicating that a called user answers a call from the called terminal, the media server may query, through an HSS, whether the calling user or the called user subscribe to a video playing service for the called user during an established call, to determine whether to play video for the called user in the call process. When either of the calling user or the called user subscribes to the video playing service for the called user, a video playing procedure may be started.

In addition, the media server (for example, a media control server) obtains terminal information from an S-CSCF or the HSS, for example, an attribute label such as a number of the calling user, an age, a gender, a network to which a user belongs, a user credit level, an online habit, a consuming behavior, or traffic consumption, a real-time position of a user, time, a user status, and a media location (including a screen of a called user) corresponding to idle time of a current VoLTE call of a user, to determine video content to be played.

217: In response to the message indicating that a called user answers a call (the 200 OK (INVITE), that is, the success response to the initial call request) received by the media server from the called terminal, the media server sends a media renegotiation message (re-INVITE) to the called terminal, to perform call media resource negotiation and video resource negotiation with the called terminal. The re-INVITE request carries media information of the video and original information about audio that has been negotiated between the calling terminal and the called terminal. The original information about audio that has been negotiated between the calling terminal and the called terminal is information about audio used in the call process between the calling terminal and the called terminal.

That the media server performs call media resource negotiation and video resource negotiation with the called terminal includes: performing media resource negotiation with the called terminal on the audio in the call process between the calling terminal and the called terminal and on the video played for the called terminal in the call process.

In addition, the media renegotiation message further carries a video playing indication, to indicate that the media renegotiation message includes an indication of media information of video, so that a charging device can perform charging based on the indication.

218: The media server receives a success response (for example, a 200 OK (re-INVITE) message) to the media renegotiation message that is sent by the called terminal and media resource negotiation is performed with the called terminal and that indicates that the called terminal agrees to play the video for the called terminal; andstores audio resource information of the calling terminal and the called terminal when the video is played.

219: The media server sends an acknowledgment message (for example, an ACK message) of the success response to the media renegotiation message to the called terminal, and plays the video for the called terminal. In addition, the media server stores the audio resource information, to help the calling terminal and the called terminal make a call.

220: The media server determines to play video for the calling terminal in the call process between the calling terminal and the called terminal.

For example, after receiving the message indicating the called user answers the call from the called terminal, the media server may query whether the calling user or the called user subscribe to a service for playing video for the called user during an established call, to determine whether to play video for the called user in the call process. When either of the calling user or the called user subscribes to the video playing service for the called user, a video playing procedure may be started.

For another example, the media server may further determine video content to be played for the calling user based on an attribute label such as a number of the calling user, an age, a gender, a network to which a user belongs, a user credit level, an online habit, a consuming behavior, or traffic consumption, a real-time position of a user, time, a user status, a media location (including a screen of a called user) in idle time of a current VoLTE call of a user, and the like.

221: The media server sends a media renegotiation message to the calling terminal, to perform call media resource negotiation and video resource negotiation with the calling terminal. In this way, the media server can play video for the calling terminal through media negotiation in the call process between the calling terminal and the called terminal.

That the media server performs call media resource negotiation and video resource negotiation with the calling terminal includes: performing media resource negotiation with the calling terminal on the audio in the call process between the calling terminal and the called terminal and on the video played for the calling terminal in the call process.

The media renegotiation message may be a success response (for example, a 200 OK message) to the media renegotiation message from the called terminal. The 200 OK message sent by the media server to the calling terminal carries SDP information of a call media resource and SDP information of a video stream, so that the media server continues to play the video for the calling terminal in the call process between the calling terminal and the called terminal. The SDP information of the call media resource includes information such as an IP address of the called terminal, and the SDP information of the video stream includes information such as an IP address of a media resource server MRS.

There are several possibilities that a message replied by the called terminal carries the SDP information of the call media resource: (a) When the called terminal rings, the 180 ringing message sent by the called terminal carries the SDP information of the call media resource; (b) when the called terminal is off-hook, the 200 OK (INVITE) message sent by the called terminal carries the SDP information of the call media resource; and (c) after the called terminal is off-hook, the called terminal receives the re-INVITE request sent by the media server and returns, to the media server, the 200 OK (re-INVITE) message carrying the SDP information of the call media resource. If a plurality of cases of the foregoing three cases exist in a same call process, the SDP information carried in a last message is selected based on a sequence of (a), (b), and (c).

222: The media server receives, from the calling terminal, an acknowledgment message (that is, an ACK message) that acknowledges that the calling terminal receives the 200 OK message that is sent by the called terminal and that is of the success response (for example, the re-INVITE message) to the media renegotiation message.

After receiving the ACK message sent by the calling terminal, the media server plays the video for the calling terminal.

223: The media server forwards the received ACK message to the called terminal, to establish a call channel between the calling terminal and called terminal.

After the foregoing steps are completed, the calling terminal and the called terminal establish a call, and the media server stops playing an audio stream of a ring back tone, and continues to play a video stream of the ring back tone for the calling terminal.

The calling terminal or the called terminal may process a call interface and a video interface in a plurality of manners. For example, if a call between the calling terminal and the called terminal includes audio only, the calling terminal may directly display a video picture in a portrait orientation or a landscape orientation. If a call between the calling terminal and the called terminal includes audio and video, the calling terminal may display a call audio/video stream picture, and display a video picture in a picture-in-picture manner.

224: The media server receives an message indicating that a conversation ends (for example, a BYE message) from the calling terminal, and the media server stops playing the ring back tone.

225: The media server sends the BYE message to the called terminal, to indicate the called terminal to be on-hook. The media server stops playing the ring back tone.

224': The media server receives an message indicating that a conversation ends (for example, a BYE message) from the called terminal, and the media server stops playing the ring back tone.

225': The media server sends the BYE message to the calling terminal, to indicate that the called terminal is on-hook. The media server stops playing the ring back tone.

It should be noted that step 216 and step 220 are not subject to a specific sequence.

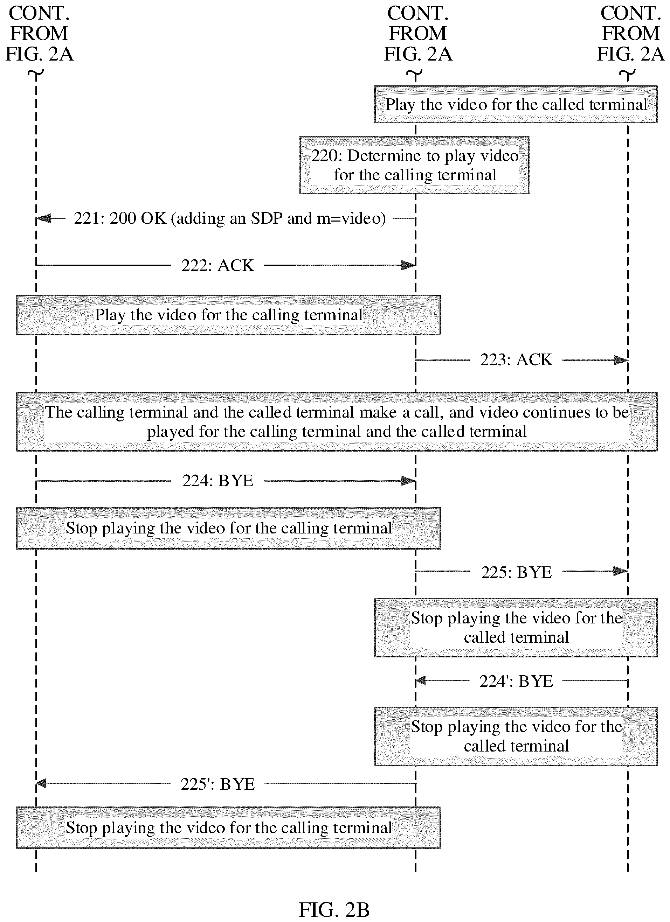

In the embodiment shown in FIG. 2A and FIG. 2B, a function of playing video for the calling terminal and the called terminal in an audio call between the calling user and the called user is implemented. This enriches user experience, improves network capability utilization, and facilitates development of a ring back tone service.

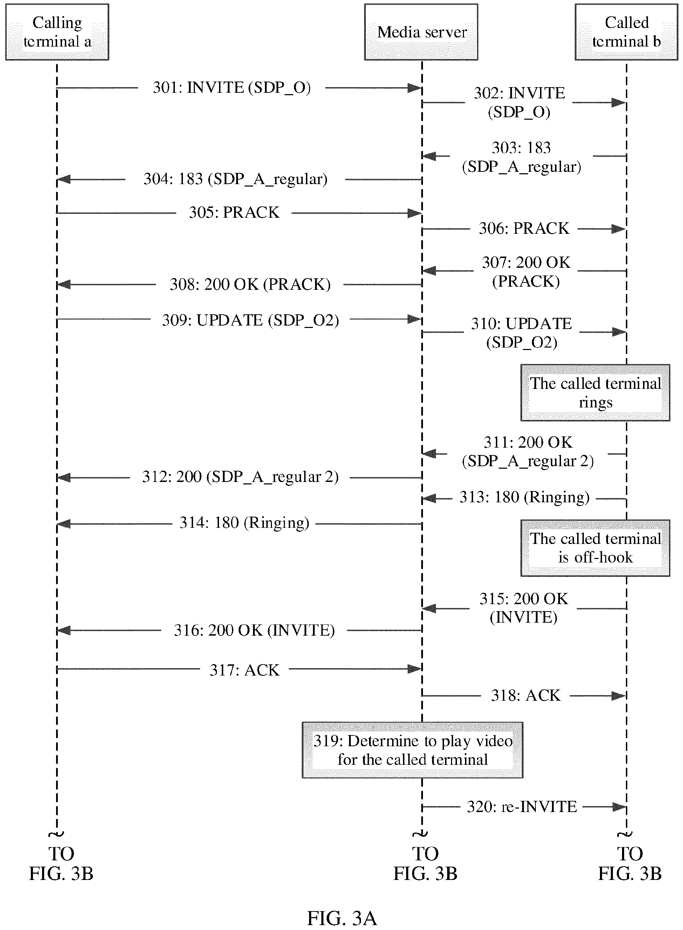

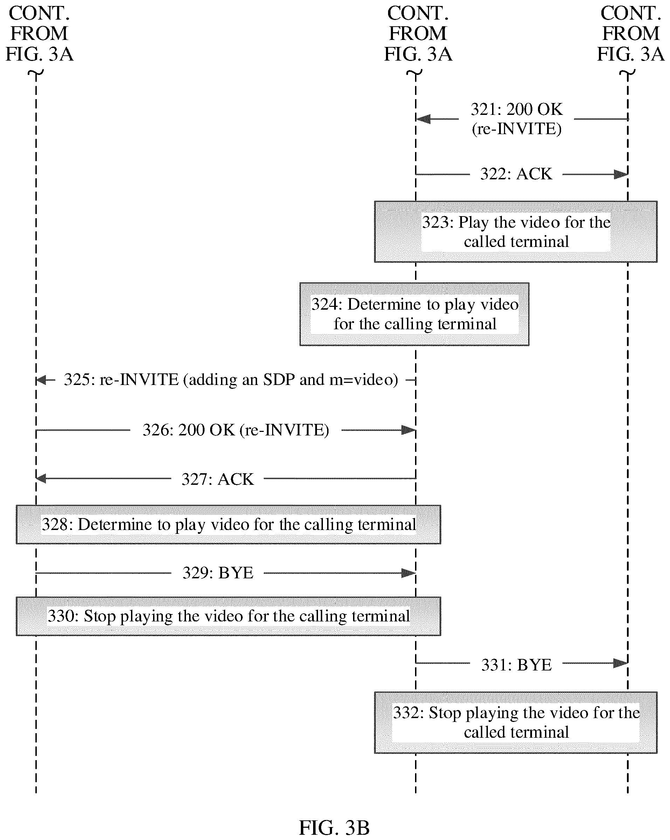

Another call processing method is provided according to an embodiment of the present application and is applied to the system shown in FIG. 1. A media server performs media negotiation with a calling terminal and/or a called terminal during an established call between the calling terminal and the called terminal, to play video for the calling terminal and/or the called terminal. Specific steps are shown in FIG. 3A and FIG. 3B. For brevity and ease of understanding, some network elements involved in signaling interaction are not shown in the figure, for example, an S-GW/P-GW, an SBC/P-CSCF, and an I-CSCF/S-CSCF. The method specifically includes the following steps.

Description of 301 to 315 is the same as description of 201 to 215. Details are not described again in this embodiment of this application.

316: A media server forwards a message indicating the called user answers the call from a called terminal to a calling terminal, that is, a 200 OK (INVITE) message.

317: The media server receives, from the calling terminal, an acknowledgment message (that is, an ACK message) that acknowledges that the message indicating that a called user answers a call (the 200 OK (INVITE) message) is received.

318: The media server forwards the received ACK message to the called terminal, to establish a call channel between the calling terminal and called terminal.

After the foregoing steps are complete, the calling terminal and the called terminal establish a call, and the calling terminal and the called terminal start calling.

319: After sending the ACK message to the called terminal, the media server determines to play video for the called terminal during an established call between the calling terminal and the called terminal.

For example, after receiving the message indicating that a called user answers a call from the called terminal, the media server may query whether a calling user or a called user subscribe to a service for playing a video for the called user during an established call, to determine whether to play video in the call process. When either of the calling user or the called user subscribes to the video playing service for the called user in the call process, a video playing procedure may be started.

In addition, the media server (for example, a media control server) obtains terminal information, for example, an attribute label such as a number of the calling user, an age, a gender, a network to which a user belongs, a user credit level, an online habit, a consuming behavior, or traffic consumption, a real-time position of a user, time, a user status, and a media location (including a screen of a called user) in idle time of a current VoLTE call of a user, to determine video content to be played for the calling terminal and/or the called terminal. The video content sent by the media server to the calling terminal and the called terminal may be the same or may be different. This is not limited in this embodiment of this application.

320: The media server sends a media renegotiation message (for example, a re-INVITE request) to the called terminal, to perform video renegotiation with the called terminal. The media renegotiation message carries session description protocol SDP information of a media resource in the call process between the calling terminal and the called terminal and SDP information of a video stream played for the called terminal in the call process.

In addition, the media renegotiation message further carries a video playing indication, to indicate that the media renegotiation message includes an indication of media information of video, so that a charging device can perform charging based on the indication. The video playing indication may be the SDP information of the video stream played for the called terminal in the call process, or another identifier. This is not limited in this embodiment of this application.

321: The media server receives a success response (for example, a 200 OK message) to the media renegotiation message that is sent by the called terminal and that indicates that the called terminal agrees to play the video for the called terminal; and stores audio resource information of the calling terminal and the called terminal.

322 and 323: The media server sends an ACK message for the re-INVITE request to the called terminal, and plays the video for the called terminal.

Description of 324 is the same as description of 220. Details are not described again in this embodiment of this application.

325: The media server sends a media renegotiation message (for example, re-INVITE) to the calling terminal, to perform video renegotiation with the calling terminal. In this way, the media server can play video for the calling terminal through media negotiation in the call process between the calling terminal and the called terminal.

The media renegotiation message (for example, re-INVITE) sent by the media server to the calling terminal carries SDP information of a call media resource and SDP information of a video stream, so that the media server continues to play the video for the calling terminal in the call process between the calling terminal and the called terminal. The SDP information of the call media resource includes information such as an IP address of the called terminal, and the SDP information of the video stream includes information such as an IP address of a media resource server MRS.

There are several possibilities that a message replied the called terminal carries the SDP information of the call media resource: (a) When the called terminal rings, the 180 ringing message sent by the called terminal carries the SDP information of the call media resource; (b) when the called terminal is off-hook, the 200 OK (INVITE) message sent by the called terminal carries the SDP information of the call media resource; and (c) after the called terminal is off-hook, the called terminal receives the re-INVITE request sent by the media server and returns, to the media server, the 200 OK (re-INVITE) message carrying the SDP information of the call media resource. If a plurality of cases of the foregoing three cases exist in a same call process, the SDP information carried in a last message is selected based on a sequence of (a), (b), and (c).

326: The media server receives a success response (for example, a 200 OK message) to the media renegotiation message (for example, re-INVITE) that is sent by the calling terminal and that indicates that the calling terminal agrees to play video for the calling terminal; and stores audio resource information of the calling terminal and the called terminal.

327: The media server sends an acknowledgment message (that is, an ACK message) to the calling terminal, to acknowledge that the success response (the 200 OK message) to the media renegotiation message (a re-INVITE request) that is sent by the calling terminal is received.

328: The media server sends video to the calling terminal in the call process between the calling terminal and the called terminal.

The media server sends the video to the calling terminal based on video information in the re-INVITE request in step 325.

329 and 330: The media server receives an message indicating that a conversation ends (that is, a BYE message) from the calling terminal, and the media server stops playing the video for the calling terminal.

331 and 332: The media server sends the BYE message to the called terminal, to notify the called terminal that the called terminal is on-hook, and stops playing the video.

In the embodiment shown in FIG. 3A and FIG. 3B, a function of playing video for the called terminal during an established call between the calling user and the called user is implemented. This enriches user experience, improves network capability utilization, and facilitates development of a related service.

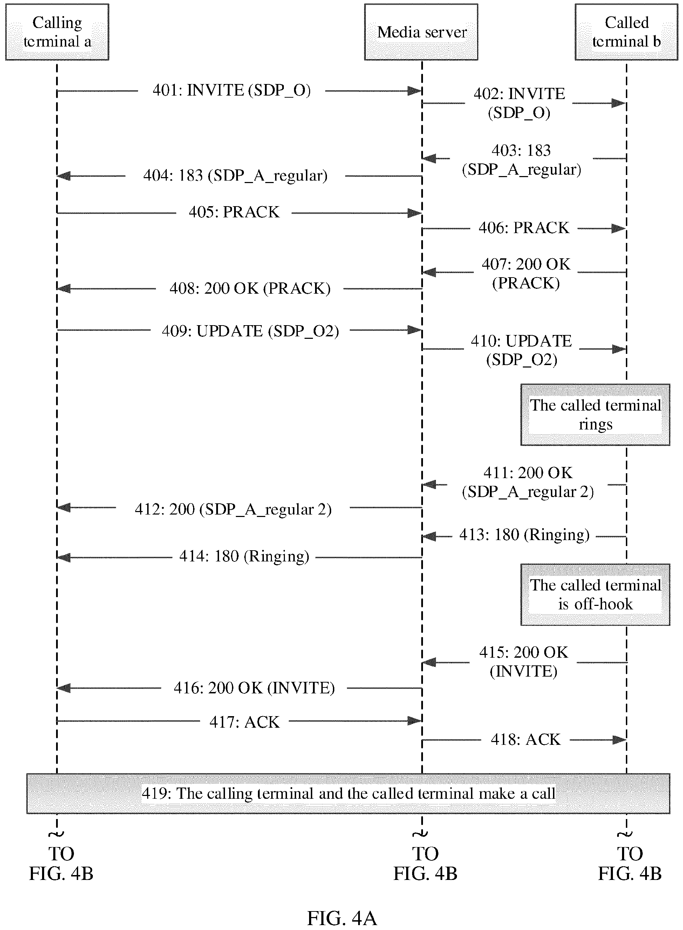

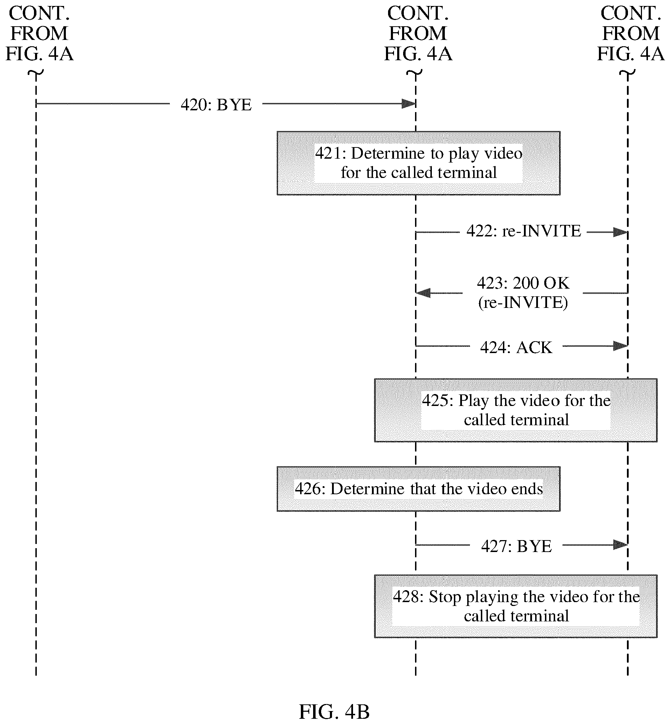

Another call processing method is provided according to an embodiment of the present application and is applied to the system shown in FIG. 1. A media server performs media negotiation with a called terminal after a call between a calling terminal and the called terminal ends, to play video for the called terminal. Specific steps are shown in FIG. 4A and FIG. 4B. For brevity and ease of understanding, some network elements involved in signaling interaction are not shown in the figure, for example, an S-GW/P-GW, an SBC/P-CSCF, and an I-CSCF/S-CSCF. The method specifically includes the following steps.

Description of 401 to 415 is the same as description of 201 to 215. Details are not described again in this embodiment of this application.

Description of 416 to 418 is the same as description of 316 to 318. Details are not described again in this embodiment of this application.

After the foregoing steps are complete, the calling terminal and the called terminal establish a call, and the calling terminal and the called terminal start calling.

420: A media server receives an message indicating that a conversation ends from a calling terminal, that is, a BYE message.

421: In response to the received message indicating that a conversation ends from the calling terminal, the media server determines to play video for a called terminal.

After receiving the message indicating that a conversation ends from the calling terminal, the media server may query whether a calling user and a called user subscribe to a video playing service for the called user after a call ends, to determine whether to play video for the called user. When either of the calling user or the called user subscribes to the video playing service for the called user after the call ends, a procedure of playing video for the called user may be started.

For another example, the media server may further determine video content to be played for the called user based on an attribute label such as a number of the calling user, an age, a gender, a network to which a user belongs, a user credit level, an online habit, a consuming behavior, or traffic consumption, a real-time position of a user, time, a user status, a media location (including a screen of a called user) in idle time of a current VoLTE call of a user, and the like.

422: The media server sends a media renegotiation message (for example, a re-INVITE request) to the called terminal, to perform video renegotiation with the called terminal. The media renegotiation message carries SDP information of an audio stream and/or a video stream played for the called terminal, so that audio and/or video are/is played for the called terminal after the call between the calling terminal and the called terminal ends. The SDP information of the audio stream and/or the video stream includes information such as an IP address of a media resource server MRS.

In addition, the media renegotiation message further carries a video playing indication, to indicate that the media renegotiation message includes an indication of media information of video, so that a charging device can perform charging based on the indication.

423: The media server receives a success response (that is, a 200 OK message) to the media renegotiation message that is sent by the called terminal and that indicates that the called terminal agrees to play the video for the called terminal.

The success response (the 200 OK message) relied by the called terminal includes media information of the video stream.

424 and 425: The media server sends an ACK message of the re-INVITE request to the called terminal, and plays the video for the called terminal.

426 to 428: The media server determines that the video ends, sends the message indicating that a conversation ends from the calling terminal to the called terminal, and stops playing the video for the called terminal.

In the embodiment shown in FIG. 4A and FIG. 4B, a function of playing video for the called terminal after a call between the calling user and the called user ends is implemented. This enriches user experience, improves network capability utilization, and facilitates development of a related service.

For example, in the procedure in FIG. 2A and FIG. 2B or FIG. 3A and FIG. 3B, after receiving the message indicating that a conversation ends (for example, the BYE message) sent by the calling terminal, the media server further determines to play the video for the called terminal, and performs step 421 to step 428.

For another example, in any procedure in FIG. 2A to FIG. 4B, the called terminal may first be on-hook. After receiving the message indicating that a conversation ends (for example, the BYE message) sent by the called terminal, the media server determines to play the video for the calling terminal. Then, step 325 to step 328 are performed.

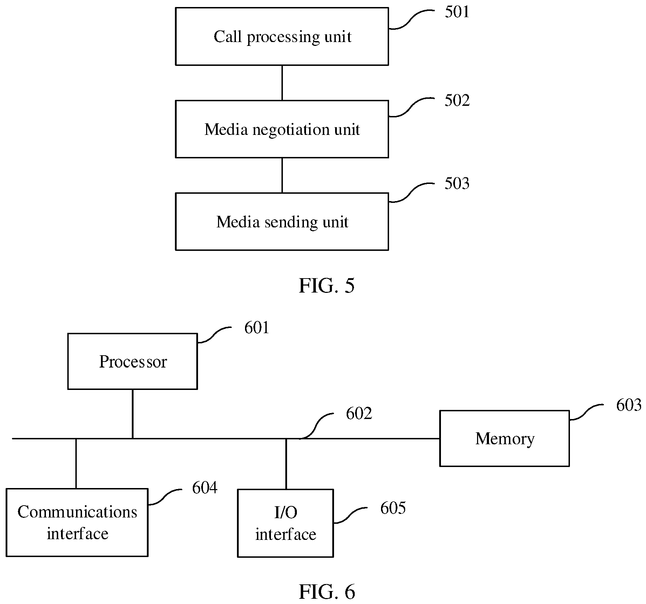

An embodiment of this application further provides a schematic structural diagram of a media server. As shown in FIG. 5, the media server includes a call processing unit 501, a media negotiation unit 502, and a media sending unit 503. Details are as follows.

The call processing unit 501 is configured to receive an initial call request sent by a calling terminal, forward the initial call request to a called terminal, and receive a success response to the initial call request from the called terminal.

The media negotiation unit 502 is configured to: after receiving the success response to the initial call request, perform call media resource negotiation and video resource negotiation with the called terminal.

The media sending unit 503 is configured to send, based on video resource negotiation with the called terminal, a video stream to the called terminal.

The units implement related functions in any one of the foregoing embodiments in FIG. 2A to FIG. 4B. Details are not described again.

Optionally, the call processing unit 501 is configured to receive an initial call request sent by a calling terminal, send the initial call request to a called terminal, receive a success response to the initial call request from the called terminal, and receive an message indicating that a conversation ends sent by the calling terminal after the called terminal is off-hook. The media negotiation unit 502 is configured to: in response to the message indicating that a conversation ends sent by the calling terminal, perform media resource negotiation with the called terminal after a call ends. The media sending unit 503 is configured to send an audio stream and a video stream to the called terminal based on the negotiated media resource.

In this embodiment, the media server is presented in a form of a functional unit. The "unit" herein may be an application-specific integrated circuit (application-specific integrated circuit, ASIC), a circuit, a processor and a memory that execute one or more software or firmware programs, an integrated logic circuit, and/or another device that can provide the foregoing functions. In a simple embodiment, a person skilled in the art may figure out that the media server may be implemented by using a processor, a memory, and a communications interface.

The media server in this embodiment of this application may further be implemented by using a computer device (or system) in FIG. 6. FIG. 6 is a schematic diagram of the computer device according to an embodiment of this application. The computer device includes at least one processor 601, a communications bus 602, a memory 603, and at least one communications interface 604. The computer device may further include an I/O interface 605.

The processor 601 may be a general-purpose central processing unit (CPU), a microprocessor, an application-specific integrated circuit (application-specific integrated circuit, ASIC), or one or more integrated circuits for controlling program execution in the solution of the present application.

The communications bus 602 may include a path for transmitting information between the foregoing components. The communications interface is configured to communicate with another device or a communications network such as the Ethernet, a radio access network (RAN), or a wireless local area network (Wireless Local Area Network, WLAN) by using any apparatus of a transceiver type.

The memory 603 may be a read-only memory (read-only memory, ROM), another type of static storage device that can store static information and/or instructions, a random access memory (random access memory, RAM), or another type of dynamic storage device that can store information and/or an instruction. Alternatively, the memory 603 may be an electrically erasable programmable read-only memory (Electrically Erasable Programmable Read-only Memory, EEPROM), a compact disc read-only memory (Compact Disc Read-only Memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, the memory 603 is not limited thereto. The memory may exist independently, and is connected to the processor through the bus. The memory may alternatively be integrated with the processor.

The memory 603 is configured to store application program code for performing the solution of the present application, and the processor controls the execution. The processor is configured to execute the application program code stored in the memory.

In a specific implementation, the processor 601 may include one or more CPUs, and each CPU may be a single-core (single-core) processor or a multi-core (multi-core) processor. The processor herein may be one or more devices, circuits, and/or processing cores configured to process data (for example, a computer program instruction).

In a specific implementation, in an embodiment, the computer device may further include the input/output (I/O) interface. For example, the output device may be a liquid crystal display (liquid crystal display, LCD), a light emitting diode (light emitting diode, LED) display device, a cathode ray tube (cathode ray tube, CRT) display device, a projector (projector), or the like. The input device may be a mouse, a keyboard, a touchscreen device, a sensing device, or the like.

The computer device may be a general-purpose computer device or a dedicated computer device. In a specific implementation, the computer device may be a desktop computer, a portable computer, a network server, a personal digital assistant (Personal Digital Assistant, PDA), a mobile phone, a tablet computer, a wireless terminal device, a communications device, an embedded device, or a device with a structure similar to that in FIG. 5. A type of the computer device is not limited in this embodiment of this application.

The media server in FIG. 1 may be the device shown in FIG. 6, and the memory stores one or more software modules. The media server may implement the software module by using the processor and the program code in the memory, to implement the foregoing method.

An embodiment of this application further provides a computer storage medium, configured to store computer software instructions that are used by the foregoing device shown in FIG. 5 or FIG. 6 and that include programs designed for executing the foregoing method embodiments. The foregoing methods can be implemented by executing the stored programs.

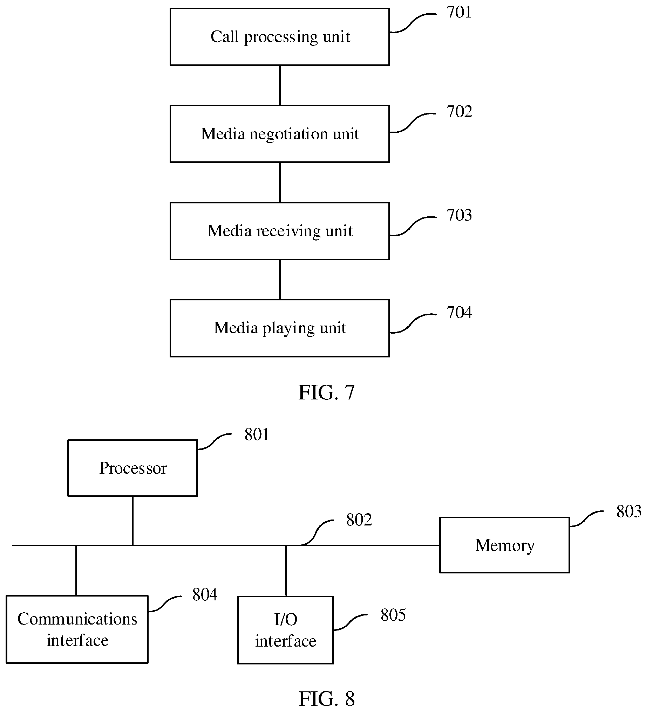

An embodiment of this application further provides a schematic structural diagram of a terminal device. As shown in FIG. 7, the terminal device includes a call processing unit 701, a media negotiation unit 702, a media receiving unit 703, and a media playing unit 704. Details are as follows.

The call processing unit 701 is configured to receive an initial call request sent by a calling terminal.

The media negotiation unit 702 is configured to: after sending a success response to the initial call request to a media server, perform media resource negotiation with the media server on audio during an established call between the calling terminal and a called terminal and on video played for the called terminal in the call process.

The media receiving unit 703 is configured to receive an acknowledgment message that is sent by the media server and that is of a success response to media renegotiation and a video stream sent by the media server.

The media playing unit 704 is configured to play the video stream sent by the media server in an audio call process with the calling terminal.

The units implement any one of related functions in the foregoing embodiments in FIG. 2A to FIG. 4B. Details are not described again.

In this embodiment, the terminal device is presented in a form of a functional unit. The "unit" herein may be an application-specific integrated circuit (application-specific integrated circuit, ASIC), a circuit, a processor and a memory that execute one or more software or firmware programs, an integrated logic circuit, and/or another device that can provide the foregoing functions. In a simple embodiment, a person skilled in the art may figure out that the terminal device may be implemented by using a processor, a memory, and a communications interface.

The terminal device in this embodiment of this application may further be implemented by using a computer device (or system) in FIG. 8. FIG. 8 is a schematic diagram of the computer device according to an embodiment of this application. The computer device includes at least one processor 801, a communications bus 802, a memory 803, and at least one communications interface 804. The computer device may further include an I/O interface 805.

The processor may be a general-purpose central processing unit (CPU), a microprocessor, an application-specific integrated circuit (application-specific integrated circuit, ASIC), or one or more integrated circuits for controlling program execution in solutions of the present application.

The communications bus may include a path for transmitting information between the foregoing components. The communications interface is configured to communicate with another device or a communications network such as the Ethernet, a radio access network (RAN), or a wireless local area network (Wireless Local Area Network, WLAN) by using any apparatus of a transceiver type.

The memory may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (Electrically Erasable Programmable Read-only Memory, EEPROM), a compact disc read-only memory (Compact Disc Read-only Memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer. However, the memory is not limited thereto. The memory may exist independently, and is connected to the processor through the bus. The memory may alternatively be integrated with the processor.

The memory is configured to store application program code used to execute the solutions of the present application, and the execution is controlled by the processor. The processor is configured to execute the application program code stored in the memory.

In a specific implementation, the processor may include one or more CPUs, and each CPU may be a single-core (single-core) processor or a multi-core (multi-Core) processor. The processor herein may be one or more devices, circuits, and/or processing cores configured to process data (for example, a computer program instruction).

In a specific implementation, in an embodiment, the computer device may further include the input/output (I/O) interface. For example, the output device may be a liquid crystal display (liquid crystal display, LCD), a light emitting diode (light emitting diode, LED) display device, a cathode ray tube (cathode ray tube, CRT) display device, a projector (projector), or the like. The input device may be a mouse, a keyboard, a touchscreen device, a sensing device, or the like.

The computer device may be a general-purpose computer device or a dedicated computer device. In a specific implementation, the computer device may be a desktop computer, a portable computer, a network server, a personal digital assistant (Personal Digital Assistant, PDA), a mobile phone, a tablet computer, a wireless terminal device, a communications device, an embedded device, or a device with a structure similar to that in FIG. 7. A type of the computer device is not limited in this embodiment of this application.

The terminal device in FIG. 1 may be the device shown in FIG. 7, and the memory stores one or more software modules. The terminal device may implement the software module by using the processor and the program code in the memory, to implement the foregoing method.

An embodiment of this application further provides a computer storage medium, configured to store computer software instructions that are used by the foregoing device shown in FIG. 6 or FIG. 7 and that include programs designed for executing the foregoing method embodiments. The foregoing methods can be implemented by executing the stored programs.

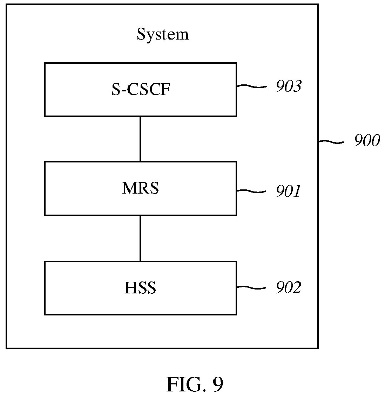

FIG. 9 is a schematic structural diagram of another call processing system 900. The apparatus system includes a media server MRS 901, an HSS 902, and an S-CSCF in the foregoing embodiments.

The MRS 901 may perform the foregoing embodiments and any steps performed by the media server in FIG. 1 to FIG. 8. Details are not described in this embodiment of this application. The HSS may be configured to store user subscription information and location information. The S-CSCF may be used for user registration, authentication control, session routing, service trigger control, and storing of session status information.

Although the present application is described with reference to the embodiments, in a process of implementing the present application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a great effect.

A person skilled in the art should understand that the embodiments of the present application may be provided as a method, an apparatus (device), or a computer program product. Therefore, the present application may use a form of hardware only embodiments, software only embodiments, or embodiments with a combination of software and hardware. Moreover, the present application may use a form of a computer program product that is implemented on one or more computer-usable storage media (including but not limited to a disk memory, a CD-ROM, an optical memory, and the like) that include computer-usable program code. The computer program is stored/distributed in a proper medium and is provided as or used as a part of the hardware together with another hardware, or may also use another allocation form, such as by using the internet or another wired or wireless telecommunications system.

The present application is described with reference to the flowcharts and/or block diagrams of the method, the apparatus (device), and the computer program product according to the embodiments of the present application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Although the present application is described with reference to specific features and embodiments thereof, it is clear that various modifications and combinations may be made thereto. Correspondingly, the specification and the accompanying drawings are merely example description of the present application defined by the appended claims. A person skilled in the art can make various modifications and variations to the present application without departing from the scope of the present claims.

## Claims

1. A call processing method, applied to a media server and comprising:
receiving (201, 301, 401) an initial call request sent by a calling terminal, and forwarding the initial call request to a called terminal;
receiving (215, 315, 415) a success response to the initial call request from the called terminal, wherein the success response to the initial call request indicates that the called terminal is off-hook; **characterized by**:
forwarding the success response (316) to the initial call request to the calling terminal, and receiving an acknowledgment message (317) that is sent by the calling terminal and that is of the success response to the initial call request;
after receiving an acknowledgment message that is sent by the calling terminal and that is of the success response to the initial call request, determining whether to play video in the call process (319, 324) and, when said determination is affirmative, performing call media resource negotiation and video resource negotiation with the called terminal; and
sending (220, 323, 425), based on video resource negotiation with the called terminal, a video stream to the called terminal during an established call between the calling terminal and the called terminal;
wherein the performing call media resource negotiation and video resource negotiation with the called terminal comprises: sending, a media renegotiation message to the called terminal, the media renegotiation message carries session description protocol, SDP, ODP information of a media resource in the call process between the calling terminal and the called terminal and SDP information of a video stream played for the called terminal in the call process; and, receiving a success response to the media renegotiation message that is sent by the called terminal and that indicates that the called terminal agrees to play the video for the called terminal.

2. The method according to claim 1, wherein the method further comprises: determining (319) a service, for playing a video during an established call, that is subscribed to by a calling user or a called user, before performing call media resource negotiation and video resource negotiation with the called terminal.

3. The method according to any one of claims 1 to 2, wherein the method further comprises:
sending the success response to the initial call request to the calling terminal, wherein the success response to the initial call request carries the SDP information of the media resource in the call process between the calling terminal and the called terminal and SDP information of a video stream played for the called terminal in the call process; and
receiving a success response to the media renegotiation message from the calling terminal.

4. The method according to any one of claims 1 to 3, wherein the method further comprises: sending a video stream to the calling terminal during an established call between the calling terminal and the called terminal.

5. The method according to any one of claims 1 to 4, wherein the media renegotiation message is a re-invite request.

6. The method according to any one of claims 1 to 2 and 4-5, wherein after receiving the message indicating that a conversation ends sent by the called terminal, the method further comprises:
sending, a media renegotiation message to the calling terminal, the media renegotiation message carries SDP information of a media resource in the call process between the calling terminal and the called terminal and SDP information of a video stream played for the calling terminal in the call process; and, receiving a success response to the media renegotiation message that is sent by the calling terminal and that indicates that the calling terminal agrees to play the video for the called terminal.

7. A call processing method, applied to a terminal device and comprising:
receiving (202, 302, 402) an initial call request sent by a calling terminal; **characterized by**:
after sending a success response to the initial call request to a media server, performing media resource negotiation with the media server on audio during an established call between the calling terminal and a called terminal and on video played for the called terminal in the call process, wherein the success response (315) to the initial call request indicates that the called terminal is off-hook; and
playing a video stream sent by the media server in an audio call process with the calling terminal; wherein the performing media resource negotiation with the media server on audio during an established call between the calling terminal and a called terminal and on video played for the called terminal in the call process comprises:
receiving a media renegotiation message sent by the media server, wherein the media renegotiation message carries session description protocol, SDP, information of a media resource of the audio in the call process between the calling terminal and the called terminal and SDP information of a video stream played for the called terminal in the call process; and
returning a success response to the media renegotiation message to the media server.

8. The method according to claim 7, the method further comprises:
after the calling terminal is on-hook, performing media resource negotiation with the media server, and receiving and playing an audio stream and a video stream that are sent by the media server after the calling terminal is on-hook.

9. The method according to claim 7 or 8, wherein the media renegotiation message is a re-invite request.

10. A media server, comprising:
a call processing unit (501), configured to receive an initial call request sent by a calling terminal, forward the initial call request to a called terminal, and receive a success response to the initial call request from the called terminal, wherein the success response to the initial call request indicates that the called terminal is off-hook; **characterized by**: forwarding the success response to the initial call request to the calling terminal, and receiving an acknowledgment message that is sent by the calling terminal and that is of the success response to the initial call request;
a media negotiation unit (502), configured to: after receiving an acknowledgment message that is sent by the calling terminal and that is of the success response to the initial call request, determine whether to play video in the call process and, when said determination is affirmative, perform call media resource negotiation and video resource negotiation with the called terminal; and
a media sending unit (503), configured to send, based on video resource negotiation with the called terminal, a video stream to the called terminal during an established call between the calling terminal and the called terminal;
wherein the media negotiation unit configured to: send, a media renegotiation message to the called terminal, the media renegotiation message carries session description protocol, SDP, information of a media resource in the call process between the calling terminal and the called terminal and SDP information of a video stream played for the called terminal in the call process; and, receive a success response to the media renegotiation message that is sent by the called terminal and that indicates that the called terminal agrees to play the video for the called terminal.

11. The media server according to claim 10, wherein call processing unit further configured to:
determining a service, for playing a video during an established call, that is subscribed to by a calling user or a called user, before performing call media resource negotiation and video resource negotiation with the called terminal.

12. The media server according to claim 10 or 11, wherein the media renegotiation message is a re-invite request.

13. A terminal device, comprising:
a call processing unit (701), configured to receive an initial call request sent by a calling terminal;
**characterized by**:
a media negotiation unit (702), configured to: after sending a success response to the initial call request to a media server, perform media resource negotiation with the media server on audio during an established call between the calling terminal and a called terminal and on video played for the called terminal in the call process,wherein the success response to the initial call request indicates that the called terminal is off-hook;
and
a media playing unit (704), configured to play the video stream sent by the media server in an audio call process with the calling terminal;
wherein the media negotiation unit performs call media resource negotiation and video resource negotiation with the media server comprises:
receiving a media renegotiation message sent by the media server, wherein the media renegotiation message carries session description protocol, SDP, information of a media resource of the audio in the call process between the calling terminal and the called terminal and SDP information of a video stream played for the called terminal in the call process; and
returning the success response to the media renegotiation message to the media server.

14. The terminal device according to claim 13, wherein the media negotiation unit is further configured to: after the calling terminal is on-hook, perform media resource negotiation with the media server;
the media receiving unit is further configured to receive an audio stream and a video stream that are sent by the media server; and
the media playing unit is further configured to play the audio stream and the video stream that are sent by the media server.

15. The terminal device according to claim 13 or 14, wherein the media renegotiation message is a re-invite request.

## Patentansprüche

1. Anrufverarbeitungsverfahren, das auf einen Medienserver angewendet wird und umfasst:
Empfangen (201, 301, 401) einer anfänglichen Anrufanforderung, die durch ein anrufendes Endgerät gesendet wird, und Weiterleiten der anfänglichen Anrufanforderung an ein angerufenes Endgerät;
Empfangen (215, 315, 415) einer Erfolgsantwort auf die anfängliche Anrufanforderung von dem angerufenen Endgerät, wobei die Erfolgsantwort auf die anfängliche Anrufanforderung angibt, dass das angerufene Endgerät abgehoben ist;
**gekennzeichnet durch:**
Weiterleiten der Erfolgsantwort (316) auf die anfängliche Anrufanforderung an das anrufende Endgerät und Empfangen einer Bestätigungsnachricht (317), die durch das anrufende Endgerät gesendet wird und die von der Erfolgsantwort auf die anfängliche Anrufanforderung ist;
nach dem Empfangen einer Bestätigungsnachricht, die durch das anrufende Endgerät gesendet wird und die von der Erfolgsantwort auf die anfängliche Anrufanforderung ist, Bestimmen, ob ein Video in dem Anrufprozess (319, 324) abgespielt werden soll, und, wenn die Bestimmung bejahend ist, Durchführen einer Aushandlung einer Anrufmedienressource und einer Aushandlung einer Videoressource mit dem angerufenen Endgerät;
und
Senden (220, 323, 425), basierend auf der Aushandlung der Videoressource mit dem angerufenen Endgerät, eines Videostroms an das angerufene Endgerät während eines aufgebauten Anrufs zwischen dem anrufenden Endgerät und dem angerufenen Endgerät;
wobei das Durchführen der Aushandlung der Anrufmedienressource und der Aushandlung der Videoressource mit dem angerufenen Endgerät umfasst: Senden einer Nachricht zum Neuaushandeln von Medien an das angerufene Endgerät, wobei die Nachricht zum Neuaushandeln von Medien Sitzungsbeschreibungsprotokoll-Informationen, SDP-Informationen, einer Medienressource in dem Anrufprozess zwischen dem anrufenden Endgerät und dem angerufenen Endgerät und SDP-Informationen eines Videostroms, der für das angerufene Endgerät in dem Anrufprozess abgespielt wird, trägt; und Empfangen einer Erfolgsantwort auf die Nachricht zum Neuaushandeln von Medien, die durch das angerufene Endgerät gesendet wird und die angibt, dass das angerufene Endgerät zustimmt, das Video für das angerufene Endgerät abzuspielen.

2. Verfahren nach Anspruch 1, wobei das Verfahren ferner umfasst: Bestimmen (319) eines Dienstes zum Abspielen eines Videos während eines aufgebauten Anrufs, dem sich ein anrufender Benutzer oder ein angerufener Benutzer anschließt, vor dem Durchführen der Aushandlung der Anrufmedienressource und der Aushandlung der Videoressource mit dem angerufenen Endgerät.

3. Verfahren nach einem der Ansprüche 1 bis 2, wobei das Verfahren ferner umfasst:
Senden der Erfolgsantwort auf die anfängliche Anrufanforderung an das anrufende Endgerät, wobei die Erfolgsantwort auf die anfängliche Anrufanforderung die SDP-Informationen der Medienressource in dem Anrufprozess zwischen dem anrufenden Endgerät und dem angerufenen Endgerät und SDP-Informationen eines Videostroms, der für das angerufene Endgerät in dem Anrufprozess abgespielt wird, trägt; und
Empfangen einer Erfolgsantwort auf die Nachricht zum Neuaushandeln von Medien von dem anrufenden Endgerät.

4. Verfahren nach einem der Ansprüche 1 bis 3, wobei das Verfahren ferner umfasst:
Senden eines Videostroms an das anrufende Endgerät während eines aufgebauten Anrufs zwischen dem anrufenden Endgerät und dem angerufenen Endgerät.

5. Verfahren nach einem der Ansprüche 1 bis 4, wobei die Nachricht zum Neuaushandeln von Medien eine Wiedereinladungsanforderung ist.

6. Verfahren nach einem der Ansprüche 1 bis 2 und 4 bis 5, wobei nach dem Empfangen der Nachricht, die angibt, dass ein Gespräch endet, die durch das angerufene Endgerät gesendet wird, das Verfahren ferner umfasst:
Senden einer Nachricht zum Neuaushandeln von Medien an das anrufende Endgerät, wobei die Nachricht zum Neuaushandeln von Medien SDP-Informationen einer Medienressource in dem Anrufprozess zwischen dem anrufenden Endgerät und dem angerufenen Endgerät und SDP-Informationen eines Videostroms, der für das angerufene Endgerät in dem Anrufprozess abgespielt wird, trägt;
und Empfangen einer Erfolgsantwort auf die Nachricht zum Neuaushandeln von Medien, die durch das anrufende Endgerät gesendet wird und die angibt, dass das anrufende Endgerät zustimmt, das Video für das angerufene Endgerät abzuspielen.

7. Anrufverarbeitungsverfahren, das auf eine Endgerätvorrichtung angewendet wird und umfasst:
Empfangen (202, 302, 402) einer anfänglichen Anrufanforderung, die durch ein anrufendes Endgerät gesendet wird; **gekennzeichnet durch:**
nach dem Senden einer Erfolgsantwort auf die anfängliche Anrufanforderung an einen Medienserver, Durchführen der Aushandlung von Medienressourcen mit dem Medienserver über Audio während eines aufgebauten Anrufs zwischen dem anrufenden Endgerät und einem angerufenen Endgerät und über Video, das für das angerufene Endgerät in dem Anrufprozess abgespielt wird, wobei die Erfolgsantwort (315) auf die anfängliche Anrufanforderung angibt, dass das angerufene Endgerät abgehoben ist; und Abspielen eines Videostroms, der durch den Medienserver gesendet wird, in einem Audioanrufprozess mit dem anrufenden Endgerät; wobei das Durchführen der Aushandlung von Medienressourcen mit dem Medienserver über Audio während eines aufgebauten Anrufs zwischen dem anrufenden Endgerät und
einem angerufenen Endgerät und über Video, das für das angerufene Endgerät in dem Anrufprozess abgespielt wird, umfasst:
Empfangen einer Nachricht zum Neuaushandeln von Medien, die durch den Medienserver gesendet wird, wobei die Nachricht zum Neuaushandeln von Medien Sitzungsbeschreibungsprotokoll-Informationen, SDP-Informationen, einer Medienressource des Audios in dem Anrufprozess zwischen dem anrufenden Endgerät und dem angerufenen Endgerät und SDP-Informationen eines Videostroms, der für das angerufene Endgerät in dem Anrufprozess abgespielt wird, trägt; und
Zurücksenden einer Erfolgsantwort auf die Nachricht zum Neuaushandeln von Medien an den Medienserver.

8. Verfahren nach Anspruch 7, wobei das Verfahren ferner umfasst:
nachdem das anrufende Endgerät aufgelegt ist, Durchführen der Aushandlung von Medienressourcen mit dem Medienserver und Empfangen und Abspielen eines Audiostroms und eines Videostroms, die durch den Medienserver gesendet werden, nachdem das anrufende Endgerät aufgelegt ist.

9. Verfahren nach Anspruch 7 oder 8, wobei die Nachricht zum Neuaushandeln von Medien eine Wiedereinladungsanforderung ist.

10. Medienserver, der umfasst:
eine Anrufverarbeitungseinheit (501), die konfiguriert ist, um eine anfängliche Anrufanforderung, die durch ein anrufendes Endgerät gesendet wird, zu empfangen, die anfängliche Anrufanforderung an ein angerufenes Endgerät weiterzuleiten und eine Erfolgsantwort auf die anfängliche Anrufanforderung von dem angerufenen Endgerät zu empfangen, wobei die Erfolgsantwort auf die anfängliche Anrufanforderung angibt, dass das angerufene Endgerät abgehoben ist; **gekennzeichnet durch:** Weiterleiten der Erfolgsantwort auf die anfängliche Anrufanforderung an das anrufende Endgerät und Empfangen einer Bestätigungsnachricht, die durch das anrufende Endgerät gesendet wird und die von der Erfolgsantwort auf die anfängliche Anrufanforderung ist; eine Medienaushandlungseinheit (502), die konfiguriert ist zum: nach dem Empfangen einer Bestätigungsnachricht, die durch das anrufende Endgerät gesendet wird und die von der Erfolgsantwort auf die anfängliche Anrufanforderung ist, Bestimmen, ob das Video in dem Anrufprozess abgespielt werden soll, und, wenn die Bestimmung bejahend ist, Durchführen der Aushandlung der Anrufmedienressource und der Aushandlung der Videoressource mit dem angerufenen Endgerät; und
eine Mediensendeeinheit (503), die konfiguriert ist, um basierend auf der Aushandlung der Videoressource mit dem angerufenen Endgerät einen Videostrom an das angerufene Endgerät während eines aufgebauten Anrufs zwischen dem anrufenden Endgerät und dem angerufenen Endgerät zu senden;
wobei die Medienaushandlungseinheit konfiguriert ist zum: Senden einer Nachricht zum Neuaushandeln von Medien an das angerufene Endgerät, wobei die Nachricht zum Neuaushandeln von Medien Sitzungsbeschreibungsprotokoll-Informationen, SDP-Informationen, einer Medienressource in dem Anrufprozess zwischen dem anrufenden Endgerät und dem angerufenen Endgerät und SDP-Informationen eines Videostroms, der für das angerufene Endgerät in dem Anrufprozess abgespielt wird, trägt; und
Empfangen einer Erfolgsantwort auf die Nachricht zum Neuaushandeln von Medien, die durch das angerufene Endgerät gesendet wird und die angibt, dass das angerufene Endgerät zustimmt, das Video für das angerufene Endgerät abzuspielen.

11. Medienserver nach Anspruch 10, wobei die Anrufverarbeitungseinheit ferner konfiguriert ist zum: Bestimmen eines Dienstes zum Abspielen eines Videos während eines aufgebauten Anrufs, dem sich ein anrufender Benutzer oder ein angerufener Benutzer anschließt, vor dem Durchführen der Aushandlung der Anrufmedienressource und der Aushandlung der Videoressource mit dem angerufenen Endgerät.

12. Medienserver nach Anspruch 10 oder 11, wobei die Nachricht zum Neuaushandeln von Medien eine Wiedereinladungsanfrage ist.

13. Endgerätvorrichtung, die umfasst:
eine Anrufverarbeitungseinheit (701), die konfiguriert ist, um eine anfängliche Anrufanforderung zu empfangen, die durch ein anrufendes Endgerät gesendet wird; **gekennzeichnet durch:**
eine Medienaushandlungseinheit (702), die konfiguriert ist zum: nach dem Senden einer Erfolgsantwort auf die anfängliche Anrufanforderung an einen Medienserver, Durchführen der Aushandlung von Medienressourcen mit dem Medienserver über Audio während eines aufgebauten Anrufs zwischen dem anrufenden Endgerät und einem angerufenen Endgerät und über Video, das für das angerufene Endgerät in dem Anrufprozess abgespielt wird, wobei die Erfolgsantwort auf die anfängliche Anrufanforderung angibt, dass das angerufene Endgerät abgehoben ist; und
eine Medienabspieleinheit (704), die konfiguriert ist, um den Videostrom, der durch den Medienserver gesendet wird, in einem Audioanrufprozess mit dem anrufenden Endgerät abzuspielen;
wobei die Medienaushandlungseinheit die Aushandlung der Anrufmedienressource durchführt und die Aushandlung der Videoressource mit dem Medienserver umfasst:
Empfangen einer Nachricht zum Neuaushandeln von Medien, die durch den Medienserver gesendet wird, wobei die Nachricht zum Neuaushandeln von Medien Sitzungsbeschreibungsprotokoll-Informationen, SDP-Informationen, einer Medienressource des Audios in dem Anrufprozess zwischen dem anrufenden Endgerät und dem angerufenen Endgerät und SDP-Informationen eines Videostroms, der für das angerufene Endgerät in dem Anrufprozess abgespielt wird, trägt; und
Zurücksenden der Erfolgsantwort auf die Nachricht zum Neuaushandeln von Medien an den Medienserver.

14. Endgerätvorrichtung nach Anspruch 13, wobei die Medienaushandlungseinheit ferner konfiguriert ist zum: nachdem das anrufende Endgerät aufgelegt ist, Durchführen der Aushandlung von Medienressourcen mit dem Medienserver;
die Medienempfangseinheit ferner konfiguriert ist, um einen Audiostrom und einen Videostrom zu empfangen, die durch den Medienserver gesendet werden; und
die Medienabspieleinheit ferner konfiguriert ist, um den Audiostrom und den Videostrom, die durch den Medienserver gesendet werden, abzuspielen.

15. Endgerätvorrichtung nach Anspruch 13 oder 14, wobei die Nachricht zum Neuaushandeln von Medien eine Wiedereinladungsanforderung ist.

## Revendications

1. Procédé de traitement d'appel, appliqué à un serveur de média et comprenant :
la réception (201, 301, 401) d'une demande d'appel initiale envoyée par un terminal appelant, et la transmission de la demande d'appel initiale à un terminal appelé ;
la réception (215, 315, 415) d'une réponse de succès à la demande d'appel initiale provenant du terminal appelé, dans lequel la réponse de succès à la demande d'appel initiale indique que le terminal appelé est décroché ;
**caractérisé par** :
la transmission de la réponse de succès (316)
à la demande d'appel initiale au terminal appelant, et la réception d'un message d'accusé de réception (317)
qui est envoyé par le terminal appelant et qui constitue la réponse de succès à la demande d'appel initiale ;
après avoir reçu un message d'accusé de réception qui est envoyé par le terminal appelant et qui correspond à la réponse de succès à la demande d'appel initiale, la détermination du fait de savoir s'il faut lire une vidéo dans le processus d'appel (319, 324) et, lorsque ladite détermination est affirmative, le fait d'effectuer une négociation de ressources de vidéo et une négociation de ressources
de média d'appel avec le terminal appelé ; et
l'envoi (220, 323, 425), sur la base d'une négociation de ressources vidéo avec le terminal appelé, d'un flux vidéo vers le terminal appelé lors d'un appel établi entre le terminal appelant et le terminal appelé ;
dans lequel le fait d'effectuer la négociation de ressources de média d'appel et de la négociation de ressources vidéo avec le terminal appelé comprend : l'envoi d'un message de renégociation de média au terminal appelé, le message de renégociation de média transporte des informations de protocole de description de session, SDP, d'une ressource de média dans le processus d'appel entre le terminal appelant et le terminal appelé ainsi que des informations SDP d'un flux vidéo lu pour le terminal appelé dans le processus d'appel ; et la réception d'une réponse de succès au message de renégociation de média qui est envoyée par le terminal appelé et qui indique que le terminal appelé accepte de lire la vidéo pour le terminal appelé.

2. Procédé selon la revendication 1, dans lequel le procédé comprend en outre : la détermination (319) d'un service, pour lire une vidéo pendant un appel établi, auquel est abonné un utilisateur appelant ou un utilisateur appelé, avant d'effectuer une négociation de ressources de média d'appel et une négociation de ressources vidéo avec le terminal appelé.

3. Procédé selon l'une quelconque des revendications 1 à 2, dans lequel le procédé comprend en outre :
l'envoi de la réponse de succès à la demande d'appel initiale au terminal appelant, dans lequel la réponse de succès à la demande d'appel initiale transporte les informations SDP de la ressource de média dans le processus d'appel entre le terminal appelant et le terminal appelé et les informations SDP d'un flux vidéo joué pour le terminal appelé dans le processus d'appel ; et
la réception d'une réponse de succès au message de renégociation de média en provenance du terminal appelant.

4. Procédé selon l'une quelconque des revendications 1 à 3, dans lequel le procédé comprend en outre : l'envoi d'un flux vidéo au terminal appelant pendant un appel établi entre le terminal appelant et le terminal appelé.

5. Procédé selon l'une quelconque des revendications 1 à 4, dans lequel le message de renégociation de média est une demande de réinvitation.

6. Procédé selon l'une quelconque des revendications 1 à 2 et 4 à 5, dans lequel, après réception du message indiquant la fin d'une conversation envoyée par le terminal appelé, le procédé comprend en outre :
l'envoi d'un message de renégociation de média au terminal appelant, le message de renégociation de média transportant des informations SDP d'une ressource de média dans le processus d'appel entre
le terminal appelant et le terminal appelé et des informations SDP d'un flux vidéo lu pour le terminal appelant dans le processus d'appel ; et la réception d'une réponse de succès au message de renégociation de média qui est envoyé par le terminal appelant et qui indique que le terminal appelant accepte de lire la vidéo pour le terminal appelé.

7. Procédé de traitement d'appel, appliqué à un dispositif de terminal et comprenant :
la réception (202, 302, 402) d'une demande d'appel initiale envoyée par un terminal appelant ; **caractérisé par** :
après avoir envoyé une réponse de succès à la demande d'appel initiale à un serveur de média, le fait d'effectuer une négociation de ressources de média avec le serveur de média sur l'audio pendant un appel établi entre le terminal appelant et un terminal appelé et sur la vidéo jouée pour le terminal appelé dans le processus d'appel, dans lequel la réponse de succès (315) à la demande d'appel initiale indique que le terminal appelé est décroché ; et la lecture d'un flux vidéo envoyé par le serveur de média dans un processus d'appel audio avec le terminal appelant ; dans lequel le fait d'effectuer une négociation de ressources de média avec le serveur de média sur l'audio pendant un appel établi entre le terminal appelant et un terminal appelé et sur la vidéo jouée pour le terminal appelé dans le processus d'appel comprend :
la réception d'un message de renégociation de média envoyé par le serveur de média, dans lequel le message de renégociation de média transporte des informations de protocole de description de session, SDP, d'une ressource de média audio dans le processus d'appel entre le terminal appelant et le terminal appelé et des informations SDP d'un flux vidéo joué pour le terminal appelé dans le processus d'appel ; et
le renvoi d'une réponse de succès au message de renégociation de média au serveur de média.

8. Procédé selon la revendication 7, le procédé comprend en outre :
après que le terminal appelant est raccroché, le fait d'effectuer une négociation de ressources de média avec le serveur de média, et la réception et la lecture d'un flux audio et d'un flux vidéo qui sont envoyés par le serveur de média après que le terminal appelant est raccroché.

9. Procédé selon la revendication 7 ou 8, dans lequel le message de renégociation de média est demande de réinvitation.

10. Serveur de média, comprenant :
une unité de traitement d'appel (501), configurée pour recevoir une demande d'appel initiale envoyée par un terminal appelant, transmet la demande d'appel initiale à un terminal appelé et reçoit une réponse de succès à la demande d'appel initiale provenant du terminal appelé, dans lequel la réponse de succès à la demande d'appel initiale indique que le terminal appelé est décroché ; **caractérisé par :** la transmission de la réponse de succès à la demande d'appel initiale au terminal appelant, et la réception d'un message d'accusé de réception qui est envoyé par le terminal appelant et qui est de la réponse de succès à la demande d'appel initiale ;
une unité de négociation de média (502), configurée pour : après avoir reçu un message d'accusé de réception qui est envoyé par le terminal appelant et qui correspond à la réponse de succès à la demande d'appel initiale, la détermination du fait de savoir s'il faut lire une vidéo dans le processus d'appel et, lorsque ladite détermination est affirmative, le fait d'effectuer une négociation de ressources de média d'appel et une négociation de ressources vidéo avec le terminal appelé ; et
une unité d'envoi de média (503), configurée pour envoyer, sur la base d'une négociation de ressources vidéo avec le terminal appelé, un flux vidéo au terminal appelé pendant un appel établi entre le terminal appelant et le terminal appelé ;
dans lequel l'unité de négociation de média est configurée pour : envoyer un message de renégociation de média au terminal appelé, le message de renégociation de média transporte des informations de protocole de description de session, SDP, d'une ressource de média dans le processus d'appel entre le terminal appelant et le terminal appelé et des informations SDP d'un flux vidéo joué pour le terminal appelé dans le processus d'appel ; et la réception d'une réponse de succès au message de renégociation de média qui est envoyé par le terminal appelé et qui indique que le terminal appelé accepte de lire la vidéo pour le terminal appelé.

11. Serveur de média selon la revendication 10, dans lequel l'unité de traitement d'appel est en outre configurée pour : déterminer un service, afin de lire une vidéo pendant un appel établi, auquel est abonné un utilisateur appelant ou un utilisateur appelé, avant d'effectuer une négociation de ressources de média d'appel et une négociation de ressources vidéo
avec le terminal appelé.

12. Serveur de média selon la revendication 10 ou 11, dans lequel le message de renégociation de média est une demande de réinvitation.

13. Dispositif terminal, comprenant :
une unité de traitement d'appel (701), configurée pour recevoir une demande d'appel initiale envoyée par un terminal appelant ; **caractérisé par** :
une unité de négociation de média (702), configurée pour : après avoir envoyé une réponse de succès à la demande d'appel initiale à un serveur de média, effectuer une négociation de ressources de média avec le serveur de média sur l'audio pendant un appel établi entre le terminal appelant et un terminal appelé et sur vidéo jouée pour le terminal appelé dans le processus d'appel, dans lequel la réponse de succès à la demande d'appel initiale indique
que le terminal appelé est décroché ;
et
une unité de lecture de média (704), configurée pour lire le flux vidéo envoyé par le serveur de média dans un processus d'appel audio avec le terminal appelant ;
dans lequel l'unité de négociation de média effectue une négociation de ressources de média d'appel et une négociation de ressources vidéo avec le serveur de média comprend :
la réception d'un message de renégociation de média envoyé par le serveur de média, dans lequel le message de renégociation de média porte des informations de protocole de description de session, SDP, d'une ressource de média de l'audio dans le processus d'appel entre le terminal appelant et le terminal appelé et les informations SDP d'un flux vidéo joué pour le terminal appelé dans le processus d'appel ; et
le renvoi de la réponse de succès au message de renégociation de média au serveur de média.

14. Dispositif terminal selon la revendication 13, dans lequel l'unité de négociation de média est en outre configurée pour : après que le terminal appelant est raccroché, effectuer une négociation de ressources de média avec le serveur de média ;
l'unité de réception de média est en outre configurée pour recevoir un flux audio et un flux vidéo qui sont envoyés par le serveur de média ; et
l'unité de lecture de média est en outre configurée pour lire le flux audio et le flux vidéo qui sont envoyés par le serveur de média.

15. Dispositif terminal selon la revendication 13 ou 14, dans lequel le message de renégociation de média est une demande de réinvitation.
